# FASCICULE DE BREVET EUROPEEN

(11) **EP 2 571 814 B1**
(45) Date de publication et mention de la délivrance du brevet: **26.02.2014**
(21) Numéro de dépôt: 11725150.4
(22) Date de dépôt: 11.05.2011
(51) Int. Cl.: C01G 49/00, C01G 49/14, C01G 51/00, C01G 51/10, C01G 3/00, C01G 53/10, H01M 4/58

(54) **PROCÉDÉ DE PRÉPARATION DE FLUOROSULFATES DE MÉTAL ALCALIN ET DE MÉTAL DE TRANSITION**
VERFAHREN FÜR DIE ZUBEREITUNG VON ALKALIMETALL- UND ÜBERGANGSMETALLFLUORSULFATEN
METHOD FOR PREPARING ALKALI METAL AND TRANSITION METAL FLUOROSULFATES

(30) Priorité: 17.05.2010 FR 1053788
(43) Date de publication de la demande: 27.03.2013
(73) Titulaire: Centre National de la Recherche Scientifique, 75016 Paris (FR)
(72) Inventeur: TARASCON, Jean-Marie, F-91540 Mennecy (FR); ATI, Mohamed, F-80000 Amiens (FR); ARMAND, Michel, F-75014 Paris (FR); RECHAM, Nadir, F-80000 Amiens (FR)
(74) Mandataire: Goulard, Sophie
(86) Numéro de dépôt international: PCT/FR2011/051051
(87) Numéro de publication internationale: WO 2011/144838

(56) Documents cités:
- US-A1- 2005 163 699
- MOHAMED ATI ET AL: "Fluorosufate Positive Electrode Materials Made with Polymers as Reacting Media", ELECTROCHEMICAL AND SOLID STATE LETTERS, vol. 13, no. 11, 16 août 2010 (2010-08-16) , pages A150-A153, XP002616782, DOI: 10.1149/1.3477936
- SEBASTIAN L ET AL: "Synthesis, crystal structure and lithium ion conductivity of LiMgFSO4", JOURNAL OF MATERIALS CHEMISTRY, THE ROYAL SOCIETY OF CHEMISTRY, CAMBRIDGE, GB, vol. 12, 1 janvier 2002 (2002-01-01), pages 374-377, XP002570175, ISSN: 0959-9428, DOI: DOI:10.1039/B108289M [extrait le 2001-12-05] cité dans la demande
- N. RECHAM ET AL: "A 3.6 V lithium-based fluorosulphate insertion positive electrode for lithium-ion batteries", NATURE MATERIALS, vol. 9, no. 1, 29 novembre 2009 (2009-11-29), pages 68-74, XP002616783, DOI: 10.1038/nmat2590

## Description

La présente invention concerne un procédé de préparation d'un matériau fluoré utilisable comme matière active d'électrode, ainsi que le matériau obtenu.

### Arrière-plan technologique

On connaît les batteries au lithium utilisant un composé d'insertion d'ions lithium comme base de fonctionnement de l'électrode positive.

Parmi les composés d'insertion connus, on peut citer notamment les oxydes de lithium et de métal de transition, tel que par exemple LiₓCoO₂, 0,4 ≤ x ≤ 1 qui est utilisé pur ou en solution solide avec du nickel, du manganèse et d'aluminium. Les principaux obstacles à la généralisation de ce type d'électrochimie sont la rareté du cobalt et le potentiel trop positif des oxydes de transition, avec pour conséquence des problèmes de sécurité pour la batterie.

On peut également citer les composés LiₓT^{M}ₘXO₄ dans lesquels T^{M} représente au moins un métal choisi parmi Fe, Mn et Co, éventuellement remplacé partiellement par un ou plusieurs éléments qui ont une valence comprise entre 1 et 5. Ces composés n'échangent que le lithium, et ne présentent qu'une très faible conductivité électronique et ionique. Ces handicaps peuvent être surmontés par l'utilisation de très fines particules (telles que des nanoparticules) et par le dépôt d'un revêtement de carbone par pyrolyse de composés organiques. Les inconvénients associés à l'utilisation de nano-particules sont une compacité faible qui se traduit par une perte d'énergie spécifique, et ce problème est encore aggravé par le dépôt de carbone. De plus, le dépôt de carbone s'effectue à haute température, dans des conditions réductrices. En pratique, il est difficile d'utiliser des éléments à degré d'oxydation supérieur à 2, car ils sont réduits. Il en est ainsi pour Fe^{III}, Mn^{III}, Cr^{III}, V^{III}, V^{IV} qui sont des dopants intéressants pour augmenter la conductivité ionique ou électronique.

D'autres composés ont été proposés, notamment des composés répondant à la formule générale AₐM_{b}(SO₄)_{c}Z_{d} dans laquelle A représente au moins un métal alcalin, Z représente au moins un élément choisi parmi F et OH, et M représente au moins un cation de métal divalent ou trivalent. Ces composés comprennent en particulier les fluorosulfates. L. Sebastian, et al., [J. Mater. Chem. 2002, 374-377] décrivent la préparation de LiMgSO₄F par voie céramique. En outre, US-2005/0163699 décrit la préparation par voie céramique de composés fluorosulfate de lithium et de M dans lesquels M est Ni, Fe, Co, Mn, (MnMg), (FeZn), ou (FeCo). Ces composés sont préparés par voie céramique à partir de LiF précurseur de Li et du sulfate de l'élément ou des éléments M. Parmi ces composés, les plus intéressants sont ceux qui contiennent Fe, car outre leur coût relativement faible, ils sont susceptibles sur la base de considérations structurales et chimiques (notamment l'iono-covalence des liaisons) de présenter des propriétés électrochimiques intéressantes dans une gamme de potentiel souhaitable pour garantir une utilisation fiable pour des applications de grands volumes. Pour des raisons d'effet inductif, les sulfates présentent de manière générale des potentiels plus élevés que les phosphates, quelle que soit leur structure. Des exemples de préparation de composés contenant divers éléments métalliques sont décrits dans US-2005/0163699 précité. Ainsi l'exemple 2 décrit la préparation d'un composé LiFeSO₄F par une méthode céramique à 600°C qui donne un composé non homogène, puis à 500°C avec obtention d'un composé rouge noir, ou encore à 400°C dans l'air avec obtention d'un composé rouge. Cette méthode est susceptible de permettre la réduction du groupement SO₄²⁻ par Fe²⁺ en l'absence d'oxygène selon SO₄²⁻ + 2Fe²⁺ ⇒ SO₂ + O²⁻ + 2Fe³⁺. La couleur rouge constatée dans les composés obtenus aux différentes températures est due à l'association O²⁺/Fe³⁺ dans une maille cristalline par exemple sous la forme de l'oxyde Fe₂O₃. Il est par ailleurs connu que les composés du Fe^{II} s'oxydent à l'air dès 200°C en donnant du Fe^{III}, et la préparation de l'exemple 2 à 400°C sous air le confirme. Les composés contenant du fer qui sont préparés par voie céramique à partir de LiF et de sulfate de fer selon US-2005/0163699 ne sont donc pas constitués par LiFeSO₄F. De même, il apparaît que les composés dans lesquels M est Co ou Ni ne sont pas stables aux températures mises en oeuvre lors de la préparation préconisée par voie céramique. Il n'est donc pas plausible que les composés décrits dans US-2005/0163699 aient réellement été obtenus.

Les procédés de préparation de composés fluorosulfate de métal alcalin et de métal de transition par voie céramique sont généralement peu coûteux, mais ils ont une cinétique très lente.

FR-2 937 970 décrit la préparation de sulfates de lithium et de métal de transition, à partir de sulfate du métal de transition hydraté et de fluorure de lithium, en utilisant comme support réactionnel un liquide ionique hydrophobe. Les procédés dans lesquels les précurseurs du fluorosulfate sont en solution ou en suspension dans un milieu liquide ionique ont une cinétique plus rapide, ils permettent de contrôler la structure cristallographique des composés obtenus, car ledit liquide ionique a pour effet d'encapsuler la molécule de sulfate hydraté utilisée comme précurseur de l'anion sulfate et de Fe. Cependant l'utilisation d'un liquide ionique rend le procédé onéreux à cause du coût des liquides ioniques, et peu pratique à cause du fait que le support est liquide.

### La présente invention

Le but de la présente invention est de fournir un procédé qui permet de produire de manière fiable, rapide et économique un fluorosulfate de métal alcalin et de métal de transition, particulièrement utile comme matériau d'électrode dans une batterie électrochimique fonctionnant par échange d'ions alcalins.

### Définition générale de l'invention

Le procédé de la présente invention est destiné à produire un matériau constitué par des particules d'un composé qui a une structure de type Tavorite et qui répond à la formule (A₁₋ₐA'ₐ)ₓ(Z_{1-b}Z'_{b})_{z}(SO₄)ₛF_{f} (I) dans laquelle : A représente Li ou Na ; A' représente une lacune ou au moins un élément dopant ; Z représente au moins un élément 3d choisi parmi Fe, Co, et Ni ; Z' représente une lacune ou au moins un élément dopant ; les indices a, b, x, z, s et f sont choisis de manière à assurer l'électroneutralité du composé, et a≥0, b≥0, x≥0, z>0, s>0, f≥0 ; et les quantités respectives a et b de dopant A et Z' sont telles que la structure de type Tavorite est préservée. Le procédé comprend :
- une 1^{ère} étape consistant à préparer un mélange de précurseurs contenant un sulfate hydraté, du ou des éléments Z, le fluorure du ou des éléments A, un précurseur du ou des éléments Z' lorsque a>0 et un précurseur du ou des éléments A' lorsque b>0 ;
- une 2^{ème} étape consistant à mettre en contact le mélange obtenu lors de la 1^{ère} étape, avec un support solide;
- une 3^{ème} étape consistant à porter le mélange obtenu à la fin de la 2^{ème} étape à la température de réaction des précurseurs mélangés au cours de la 1^{ere} étape, et à maintenir ladite température jusqu'à la fin de la réaction;
- une 4^{ème} étape consistant à éliminer le support solide;
ledit procédé étant caractérisé en ce que le support solide est un polymère qui est solide à la température ambiante, qui a un point de fusion inférieur à la température de réaction des précurseurs et qui est stable au moins jusqu'à la température de réaction des précurseurs, ledit polymère étant soluble dans un solvant organique aprotique non polaire.

### Description détaillée

Le polymère support de la réaction est choisi de préférence parmi les polymères qui sont stables à la température de réaction pendant une durée suffisante pour permettre la réaction totale qui donne une phase unique. Le solvant peut être choisi parmi les nitriles (par exemple l'acétonitrile), les cétones (par exemple l'acétone), un chloroalcane ayant de 1 à 6 atomes de carbone (par exemple le dichlorométhane), les alcools ayant de 1 à 3 atomes de carbone, l'acétate d'éthyle et le THF.

Le polymère peut être notamment un polyéthylène glycol (PEG), polyoxyéthylène (POE), un polystyrène (PS) ou un poly(méthacrylate de méthyle) PMMA. Pour chaque cas particulier de préparation, le polymère est choisi en fonction de son domaine de stabilité, de sa viscosité et de sa température de fusion (qui dépendent de sa masse molaire). Pour des performances similaires, on pourra utiliser un PEG ayant une masse moléculaire plus faible que celle d'un POE.

Lorsque le polymère support de réaction est un polyéthylène glycol (PEG), il peut être choisi parmi les PEG qui ont uniquement des groupes OH terminaux, les polyéthylène glycol dialkyléther (PEGDAE) et les polyéthylène glycol monoalkyléther (PGEMAE). Un PEGDAE de masse moléculaire élevée est plus stable qu'un PEGDAE de masse moléculaire plus faible, et un PEGDAE est plus stable qu'un polyéthylène glycol monoalkyléther (PGEMAE) de masse moléculaire équivalente. Par exemple, un polyéthylène glycol diméthyléther (PEGDME) de masse molaire 2000 est stable à 295°C pendant au moins 24 heures, contrairement à un PEGDME ayant une masse molaire de 800, un polyéthylène glycol monométhyléther (PEGMME) de masse molaire 1000 ou un polyéthylène glycol ayant des groupes acides terminaux et une masse molaire de 600.

Lorsque le polymère support est un polyéther, il peut être choisi parmi les poly(oxyde d'éthylène) (POE) ou les copolymères d'oxyde d'éthylène et d'un comonomère, par exemple l'oxyde de propylène. Un copolymère à blocs d'oxyde d'éthylène et d'oxyde de propylène ayant une masse molaire de 5800 et deux groupes OH terminaux a une stabilité thermique suffisante pour permettre une réaction totale entre les précurseurs et l'obtention d'un produit à phase unique. En revanche, un polymère de même nature ayant une masse molaire de 1400 u.a. et un seul groupe OH terminal n'a pas une stabilité suffisante.

Les températures auxquelles les précurseurs utilisés réagissent sont connues de l'homme de métier. Elles sont généralement inférieures à 300°C et une durée de réaction de 24 heures est généralement suffisante pour obtenir une phase unique. Par exemple :
- LiF et FeSO₄.H₂O réagissent à une température au moins égale à 230°C. A 295°C, une durée de réaction de 24 h est suffisante pour obtenir une phase unique LiFeSO₄F ;
- NaF et FeSO₄.H₂O réagissent à une température au moins égale à 230°C. A 290°C, une durée de réaction de 24 h est suffisante pour obtenir une phase unique NaFeSO₄F ;
- LiF et CoSO₄.H₂O réagissent à une température au moins égale à 230°C. A 270°C, une durée de réaction de 24 h est suffisante pour obtenir une phase unique LiCoSO₄F ;
- LiF et NiSO₄.H₂O réagissent à une température au moins égale à 230°C. A 270°C, une durée de réaction de 24 h est suffisante pour obtenir une phase unique LiNiSO₄F ;
- NaF et CoSO₄.H₂O réagissent à une température au moins égale à 250°C. A 290°C, une durée de réaction de 24 h est suffisante pour obtenir une phase unique NaCoSO₄F.

Les fluorosulfates (I) obtenus par le procédé de l'invention ont une structure Tavorite. La structure Tavorite comprend des octaèdres MO₄F₂ centrés sur le métal de transition M (M= Fe, Co, Ni, Mn, Mg...) et reliés par des atomes de fluor apicaux formant des chaînes le long de l'axe c. Les octaèdres ont tous des atomes F en position trans, mais ils se répartissent en deux types différents. Les chaînes sont reliées entre elles par des tétraèdres SO₄ isolés, créant ainsi une structure tridimensionnelle et délimitant des tunnels le long de faxe [100], [010] et [101].

Un composé (I) selon de la présente invention a une structure Tavorite distordue du fait que l'élément A₁₋ₐA'ₐ se loge dans lesdits tunnels (diffusion 3D). Lorsque A est Li, la structure de type Tavorite distordue du composé (I) a une maille triclinique cristallisant dans le groupe d'espace P-1. Lorsque A est Na, la structure de type Tavorite distordue du composé (I) a une maille monoclinique cristallisant dans le groupe d'espace P2₁/C.

Lorsque A' est un élément dopant, A' peut être un métal alcalin différent de A, un métal alcalino-terreux ou un métal 3d, en particulier Ti, V, Cr, Mn, Fe, Mn, Co ou Cu. De manière générale, la teneur "a" en dopant A' est de préférence inférieure à 0,25%, c'est-à-dire a<0,25.

Lorsque Z' est un élément dopant, Z' peut être un métal choisi parmi les métaux alcalins, Mn, Mg, Ca, Sc, Ti, V, Cr, Zn, Al, Ga, Sn, Zr, Nb et Ta dans au moins un de leurs degrés d'oxydation. De manière générale, la teneur "b" en dopant Z' est de préférence inférieure à 25%, c'est-à-dire b<0,25. Les dopants Z' particulièrement intéressants sont Mn, Mg, Zn, Ti, et Al.

Des composés selon l'invention particulièrement préférés sont ceux qui répondent aux formules Li(Z_{1-b}Z'_{b})SO₄F et Na(Z_{1-b}Z'_{b})_{z}SO₄F, en particulier LiFeSO₄F, LiCoSO₄F, LiNiSO₄F et leurs solutions solides, NaFeSO₄F, NaCoSO₄F, NaNiSO₄F et leurs solutions solides, ainsi que les solutions solides Li(Z_{1-b}Mn_{b})SO₄F et Na(Z_{1-b}Mn_{b})SO₄F dans lesquels Z est Fe, Co ou Ni, b≤0,2.

Une catégorie particulière de composés (I) comprend les composés dans lesquels le groupe (Z_{1-b}Z'_{b}) représente plus d'un élément. Il s'agit de composés dans lesquels Z représente plus d'un élément choisi parmi Fe, Co et Ni, ainsi que de composés dans lesquels b ≠ 0, les deux cas pouvant se combiner.

Un composé selon l'invention se présente sous la forme de particules dont la dimension est inférieure à 100 µm, voire inférieure à 100 nm.

Dans la 1^{ère} étape du procédé, les précurseurs sont utilisés en quantité stoechiométrique, ou avec un excès de fluorure de métal alcalin A, de préférence inférieur à 10%.

La quantité de précurseurs dans le mélange obtenu à la fin de la 2^{ème} étape est de préférence de 10 à 50 % en masse, et plus préférentiellement de 15 à 25 % en masse, par rapport à la masse totale "précurseurs + support polymère".

Le précurseur du métal alcalin A est un fluorure de A, LiF ou NaF en l'occurrence. Il agit également en tant que précurseur de F.

Lorsque le composé (I) contient A', les éléments A' sont introduits sous forme d'un composé dont l'anion est F⁻ ou SO₄²⁻ ou sous forme d'un composé dont l'anion est facile à éliminer, par dissolution sélective, par exemple sous forme d'un halogénure autre que F.

Un précurseur de A' ou de Z' choisi parmi les fluorures peut aussi agir en tant que précurseur de F additionnel. En outre, un précurseur de F additionnel peut être choisi parmi les fluorures dont le cation est facile à éliminer, tels que les fluorures d'ammonium, d'imidazolium ou de pyridinium (par exemple NH₄F, nHF ou C₃H₅N₂F, nHF, ou C₅H₆NF, nHF, n étant inférieur ou égal à 5).

Le précurseur de Z est un sulfate de Z hydraté. L'utilisation d'un sulfate monohydrate est particulièrement favorable à l'obtention d'un composé (I) sous forme d'une phase unique à structure Tavorite distordue. Le monohydrate ZSO₄.H₂O peut être obtenu à partir de ZSO₄.7H₂O soit par chauffage sous vide à une température entre 150°C et 450°C (par exemple 200°C), soit par chauffage dans un chauffage de FeSO₄.7H₂O introduit dans un polyéthylène glycol (PEG) à une température entre 200 et 240°C pendant 2 heures permet d'obtenir, après élimination du PEG et séchage, le composé FeSO₄,H₂O sous forme d'une poudre dont la couleur varie de blanc vert [lorsque le produit obtenu contient un peu de FeSO₄.4H₂O (1 à 5%)] à blanc grisâtre [lorsque le produit obtenue contient une quantité infime de FeSO₄ anhydre (1%)]. La masse moléculaire du PEG utilisé peut varier dans une large mesure, par exemple entre 500 et 20000 u.a. (g/mol).

Le précurseur d'un élément Z' est de préférence un sulfate (auquel cas il apporte le complément requis d'anion sulfate). Il peut en outre être un fluorure de Z' (auquel cas il agit aussi comme précurseur de F) ou un composé dont l'anion est facile à éliminer de manière à ne pas polluer le composé final (I) (par exemple un halogénure autre qu'un fluorure).

Dans un mode de réalisation préféré, le précurseur des éléments Z et Z' est sous forme d'une solution solide forme d'hydrate, en particulier sous forme de monohydrate. Un précurseur Z_{1-b}Z'_{b}SO₄.H₂O peut être préparé notamment par un procédé comprend les étapes suivantes :
- dissolution de 1-b mole de ZSO₄.7H₂O et b mole de Z'SO₄.7H₂O dans de l'eau préalablement dégazée par l'argon ou l'azote pour éviter l'oxydation de Fe(II), b étant de préférence inférieur à 0,3 ;
- addition d'un alcool (par exemple l'éthanol ou l'isopropanol) pour provoquer la précipitation de Z_{1-b}Z'_{b}SO₄, 7H₂O ;
- récupération (par exemple par centrifugation) de la poudre qui s'est formée,
- lavage à l'alcool, puis chauffage à une température entre 150 et 250 °C (par exemple à 200°C) sous vide pendant 1heure.

La préparation d'un précurseur dans lequel Z représente Fe et Co ou Fe et Ni peut être effectuée de la même manière à partir de FeSO₄.7H₂O et de CoSO₄.7H₂O ou de FeSO₄.7H₂O et de NiSO₄.7H₂O, b étant inférieur à 1.

Les composés Z_{1-b}Z'_{b}SO₄.H₂O peuvent en outre être obtenus à partir de Z_{1-b}Z'_{b}SO₄,7H₂O par un procédé analogue à celui décrit ci-dessus pour l'obtention d'un composé ZSO₄.H₂O à partir d'un composé ZSO₄.7H₂O.

Le précurseur de l'élément Z qui est nécessairement un sulfate, agit par conséquent également comme précurseur de l'anion sulfate. Un précurseur de sulfate additionnel peut être choisi parmi les sulfates des éléments Z' et/ou A', ainsi que parmi les sulfates de cations faciles à éliminer, notamment l'acide H₂SO₄, et ses sels d'ammonium, d'amine, d'imidazole ou de pyridine thermolabiles tels que par exemple NH₄HSO₄, (NH₄)₂SO₄, (C₃H₅N₂)HSO₄, (C₅H₆N)₂SO₄, (C₃H₅N₂)₂SO₄ et (C₅H₆N)HSO₄.

Dans un mode de réalisation particulier, la troisième étape comprend deux phases successives. La première phase vise à faire fondre le polymère support de la réaction, le polymère étant choisi de sorte que sa température de fusion soit inférieure à la température à laquelle les précurseurs du composé (I) réagissent entre eux. La température de cette 1^{ère} phase est généralement entre 30 et 160°C. La deuxième phase vise à faire réagir les précurseurs du composé (I). Elle est généralement effectuée à une température entre 230 et 300°C.

La 3^{ème} étape est effectuée de préférence sous atmosphère inerte, à la pression atmosphérique.

Le chauffage peut être effectué par divers moyens, notamment par chauffage dans un four, ou par chauffage par micro-ondes. Il peut être effectué en continu, dans une enceinte chauffée et dans laquelle circulent le milieu réactionnel comprenant le polymère liquide support et les précurseurs), avec un temps de résidence permettant à la réaction d'être totale.

La durée du chauffage varie généralement de 10 minutes à 200 heures, préférentiellement de 3 à 30 heures.

La séparation du composé (I) lors de la 4^{ème} étape peut être réalisée par exemple par extraction du polymère support par un solvant organique aprotique non polaire dans lequel le polymère est soluble, et élimination des éventuels sous-produits.

Après séparation, le composé (I) peut être lavé avec un solvant organique aprotique polaire du même type, (tel que par exemple l'acétone, l'acétonitrile, l'acétate d'éthyle), puis utilisé sans purification supplémentaire.

Un composé (I) peut être utilisé dans diverses applications en fonction des éléments qui le constituent. A titre d'exemple, les composés (I) de l'invention peuvent être utilisés comme matière active pour la fabrication d'électrodes dans les batteries et les systèmes électrochromes, comme céramiques, comme matériaux magnétiques pour le stockage l'information, comme pigment, ou dans une cellule photovoltaïque comme matériau absorbant la lumière avec un meilleur résultat que celui obtenu à l'aide de TiO₂ classiquement utilisé.

Lorsqu'un composé selon l'invention est utilisé comme matériau d'électrode, l'électrode peut être préparée en déposant sur un collecteur de courant, un matériau composite obtenu en mélangeant par broyage manuel ou par broyage mécanique (par exemple par un broyage d'environ 10 minutes à l'aide d'un broyeur SPEX 1800), un mélange comprenant un composé de l'invention et un agent de conduction électronique (par exemple un noir de carbone). Le pourcentage en poids de composé (I) par rapport au matériau composite "composé (I) + carbone" peut-être de 50 à 99%, plus particulièrement de 80 à 95%.

La quantité de matériau déposée sur le collecteur de courant est de préférence telle que la quantité de composé selon l'invention soit comprise entre 0,1 et 200, de préférence de 1 à 50 mg par cm². Le collecteur de courant peut être constitué par une grille ou une feuille d'aluminium, de titane, de papier de graphite ou d'acier inoxydable.

Une électrode selon l'invention peut être utilisée dans une cellule électrochimique comprenant une électrode positive et une électrode négative séparées par un électrolyte. L'électrode selon l'invention constitue l'électrode positive.

L'électrode négative peut être constituée par du lithium métallique ou par l'un de ses alliages, par un oxyde de métal de transition formant par réduction une dispersion nanométrique dans de l'oxyde de lithium, ou par un nitrure double de lithium et d'un métal de transition. L'électrode négative peut en outre être constituée par un matériau capable d'insérer de manière réversible des ions Li⁺ à des potentiels inférieurs à 1,6 V. Comme exemples de tels matériaux, on peut citer les oxydes à bas potentiel ayant pour formule générale Li₁₊y_{+x/3}Ti_{2-x/3}O₄ (0 ≤ x ≤ 1, 0 ≤ y ≤ 1), Li_{4+x,}Ti₅O₁₂ (0 ≤ x' ≤ 3), le carbone et les produit carbonés issus de la pyrolyse de matières organiques, ainsi que les dicarboxylates.

L'électrolyte comprend avantageusement au moins un sel de lithium ou de sodium en solution dans un solvant liquide aprotique polaire, dans un polymère solvatant éventuellement plastifié par un solvant liquide ou un liquide ionique, ou dans un gel constitué par un solvant liquide gélifié par addition d'un polymère solvatant ou non solvatant.

### Les exemples

La présente invention est illustrée par les exemples suivants, auxquels elle n'est cependant pas limitée.

Les produits suivants ont été utilisés :
- FeSO₄.7H₂O, fourni par la société Ficher Scientific
- CoSO₄.7H₂O, fourni par la société Acros Organic
- NiSO₄.7H₂O, fourni par la société Acros Organic
- Polyéthylène glycol de masse 20 000 u.a. (PEG 20 000) fourni par la société Alfa Aesar (Température de fusion T_{F} = 62,4°C, température de décomposition T_{D} = 351°C) ;
- PEG monométhyléther de masse 1 000 u.a. fourni par la société Alfa Aesar, (T_{F} = 52-56°C, T_{D} >300°C) ;
- PEG monométhyléther de masse 2 000 u.a. fourni par la société Alfa Aesar, (T_{F} = 52-56°C, T_{D} >300°C) ;
- PEG diméthyléther de masse 2 000 u.a. fourni par la société Alfa Aesar, (T_{F} = 49-53°C, T_{D} >300°C) ;
- Polyéthylène glycol de masse 8 000 u.a. (PEG 8 000) fourni par la société Alfa Aesar (T_{F} = 62,4°C, T_{D} = 256°C) ;
- poly (oxyde d'éthylène) de masse >5 000 000 u.a. (POE > 5 000 000) fourni par Alfa Aesar (T_{F} = 62,4°C, T_{D} = 326°C) ;
- Poly méthacrylate de méthyle de masse molaire 38 000 u.a. (PMMA 38 000), fourni par Acros Organic, (T_{F} = 120°C, T_{D} = 303°C)
- Polystyrène de masse molaire 25 000 u.a. fourni par Alfa Aesar, (T_{F} = 150°C, T_{D} >400°C) ;
- PEG 600 diacid, ayant une masse molaire de 600 u.a., commercialisé par Aldrich, (T_{F} = température ambiante, T_{D} = >280°C)
- Copolymère PEG-PPO-PEG, masse M_{w} = 5800 u.a., T_{F} =60°C, T_{D} >300°C, commercialisé par la société Aldrich Sigma sous la dénomination Pluronic PE10300) et répondant à la formule 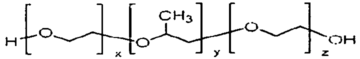
- Copolymère PE-block-PEG, masse molaire Mw = 1400 u.a., T_{F} = 60°C, T_{D} = 260°C, répondant à la formule

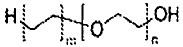

Les analyses par diffraction des rayons X ont été effectuées à l'aide d'un diffractomètre à poudre Bruker D8-Advantage en utilisant la radiation Cu-Kα (λ₁ = 1.5405 Å, λ₂ = 1.5443 Å).

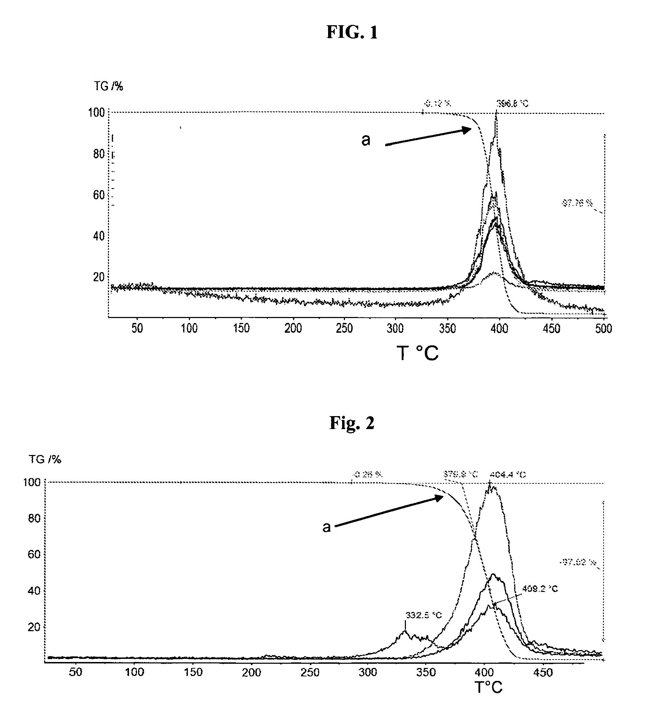

La stabilité de certains polymères utilisés comme supports réactionnels a été vérifiée par analyse thermogravimétrique, en utilisant un dispositif STA 449C Jupter Thermal Analyzer commercialisé par la société Netzsch. Les mesures ont été effectuées sous argon avec une rampe de température de 5°C/min jusqu'a 500°C. Les diagrammes sont représentés sur les figures 1 à 3. Sur chacune de ces figures, la courbe désignée par a représente l'évolution de la masse de polymère en fonction de la température.

La figure 1 correspond au polymère PEG 20 000 et elle montre que ce polymère, dont le point de fusion est de 62,4°C, est stable thermiquement jusqu'à 350°C.

La figure 2 correspond au polymère POE >5 000 000, et elle montre que ce polymère, dont le point de fusion est de 64,1 °C, est stable thermiquement jusqu'à 326°C.

La figure 3 correspond au polymère PMMA 38 000, et elle montre que la stabilité thermique de ce polymère est inférieure à celle de PEG 20 000 ou de PEO 50 000, mais reste cependant dans un domaine de température opérationnel pour former les fluorosulfates (A₁₋ₐA'ₐ)ₓ(Z_{1-b}Z'_{b})_{z}(SO₄)ₛF_{f}, en particulier LiFeSO₄F.

### Exemple 1

### Préparation de LiFeSO₄F dans PEG 20 000

### Préparation de FeSO₄.H₂O

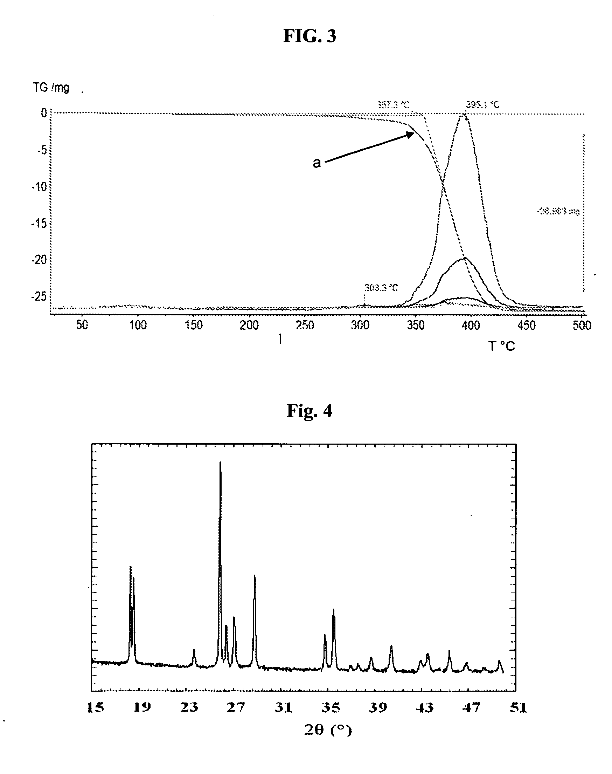

Dans une étape préliminaire, on a soumis FeSO₄.7H₂O à un traitement thermique dans PEG 2 000 à 150°C pendant 2 heures. Le monohydrate FeSO₄.H₂O formé a été récupéré par centrifugation, lavé à l'acétate d'éthyle, puis séché sous vide à température ambiante. Le composé obtenu a été soumis à une analyse par diffraction des rayons X. Le diffractogramme est représenté sur la figure 4. Il montre les raies caractéristiques du minéral Szomolnokite (FeSO₄.H₂O).

### Préparation de LiFeSO₄F

On a mélangé 0,85 g de FeSO₄.H₂O et 0,1297 g de LiF (ce qui correspond à un rapport molaire 1/1) dans un broyeur à billes SPEX contenant une bille d'acier inoxydable de 1 cm de diamètre, on a scellé la cellule de broyage sous argon, puis on a broyé le mélange pendant 10 min.

Dans un autoclave comprenant un gainage en Téflon^{®}, on a placé 3 g de PEG 20 000, puis le mélange de LiF et de FeSO₄.H₂O obtenu après broyage, et on a recouvert par 3 g supplémentaires de PEG 20 000. Ensuite, on a fermé l'autoclave sous argon, on l'a placé dans un four préchauffé à 150°C, et on a soumis à un traitement thermique comprenant les étapes suivantes :
- maintien pendant 40 min à 150°C pour faire fondre le PEG 20 000,
- chauffage jusqu'à 260°C avec une vitesse de 1°C/min
- chauffage jusqu'à 295°C avec une vitesse de 0,2°C/min,
- maintien à 295°C pendant 24 heures, cette température étant la température de réaction des précurseurs.

Après refroidissement du mélange réactionnel jusqu'à la température ambiante, on a ajouté de l'acétate d'éthyle, puis on a séparé par centrifugation le fluorosulfate obtenu sous forme de poudre de la solution de polymère dans l'acétate d'éthyle. Ensuite, la poudre obtenue après centrifugation a été lavée 3 fois avec 20 mL d'acétate d'éthyle, puis séchée à l'étuve à 50°C pendant 3 heures.

Le produit obtenu se présente sous forme d'une poudre couleur sable.

### Caractérisation par RDX

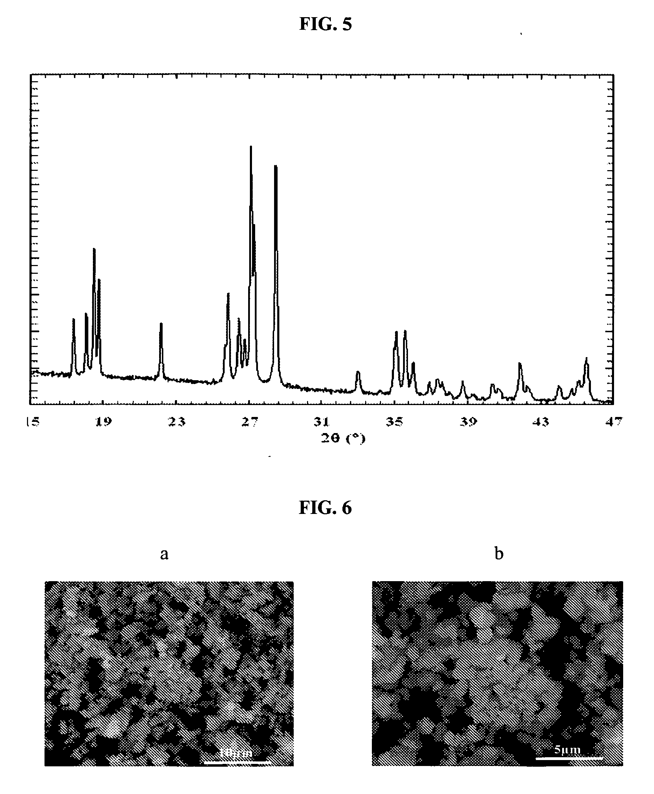

Le produit obtenu a été soumis à une analyse par diffraction des rayons X. Le diagramme est représenté sur la figure 5, et il montre que le produit obtenu est une phase unique de LiFeSO₄F avec une structure tavorite P-1.

### Caractérisation par MEB

Le produit obtenu a été caractérisé par MEB à l'aide d'un microscope électronique à balayage « FEI Quanta F200P » avec un faisceau d'électron de 20 kV sous un vide faible pour éviter tout effet de chargement des électrons qui risque de dégrader la qualité des images. Une analyse des éléments élémentaires a été réalisée également sur plusieurs particules isolées pour vérifier que le produit obtenu a une composition homogène.

Les figures 6a et 6b sont des micrographies MEB avec deux grossissements différents qui montrent la morphologie du matériau LiFeSO₄F obtenu.

### Analyse élémentaire

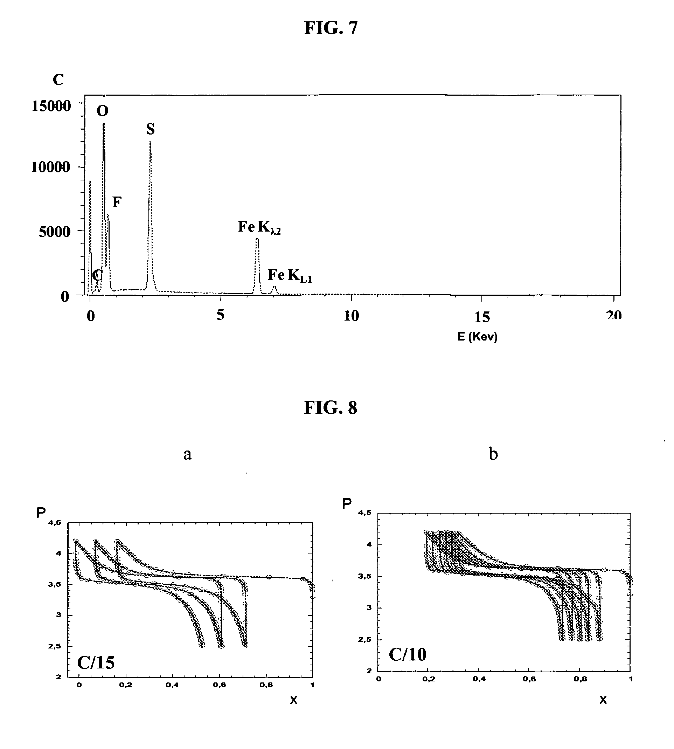

L'analyse élémentaire EDX a été effectuée sur différentes particules. Le résultat obtenu est représenté sur la figure 7, sur laquelle le nombre de coups C est représenté en ordonnée et l'énergie E (en KeV) est représentée en abscisse.

Le diagramme EDX ne montre pas la présence du lithium qui est un élément trop léger pour pouvoir être détecté par la technique utilisée.

### Caractérisation électrochimique

On a testé le produit obtenu dans une cellule électrochimique assemblée de la manière suivante.

On a préparé un mélange de LiFeSO₄F obtenu selon le procédé ci-dessus et de noir de carbone Super P dans un rapport en poids de 80/20, et on l'a broyé pendant 5 minutes sous argon dans un broyeur Spex-800 contenant une bille de 10 mm de diamètre

On a élaboré deux cellules de type Swagelok® classique en utilisant pour chaque cellule un film de lithium comme anode, deux disques de fibre de verre borosilicate Whatman GF/D imprégnés par une solution 1 de LiPF₆ dans un mélange carbonate d'éthyle/carbonate de diméthyle 1/1 en poids (EC), et une cathode constituée par un film de LiFeSO₄F sur un plongeur d'aluminium en tant que collecteur de courant, la quantité de LiFeSO₄F étant de 8 mg.cm⁻².

On a soumis les cellules à une succession de cycles charge-décharge en mode galvanostatique en utilisant un dispositif de contrôle MacPile (Claix, France) à 20°C. Le cyclage a été effectué de manière classique entre 2,5 et 4,2 V vs. Li⁺/Li avec un taux de C/15 pour l'une des cellules et de C/10 pour l'autre cellule (correspondant à 1 Li⁺ échangé respectivement en 15 h et en 10 h).

Les performances sont représentées sur les figures 8a et 8b sur lesquelles le potentiel P (en V vs. Li⁺/Li) est donné en ordonnée, et le taux x de lithium dans LiₓFeSO₄F est donné en ordonnée. Ces figures confirment que la phase LiFeSO₄F est électrochimiquement active vis-à-vis du Li. Selon la vitesse de cyclage C/15 (désinsertion d'un Li⁺ en 15 heures) ou C/10 (désinsertion d'un Li⁺ en 10 heures), on peut extraire plus de 0,8 Li par unité formulaire, ce qui donne une capacité réversible de 130 mAh/g. Ces courbes montrent de plus que l'insertion de Li est réversible sur un grand nombre de cycles. On notera que la polarisation des électrodes est faible, bien que la formulation des électrodes n'ait pas été optimisée, les particules de LiFeSO₄F n'étant ni de taille nanométrique, ni enrobées par du carbone. Le composé LiFeSO₄F est de ce fait particulièrement avantageux par rapport au LiFePO₄ qui, sous forme de particules micrométriques non enrobées de carbone, ne permet pas d'obtenir des capacités supérieures à 90 mAh/g avec des conditions de cyclage identiques à celles du présent exemple.

### Exemple 2

### Préparation de LiFeSO₄F dans PEO> 5 000 000

On a reproduit le mode opératoire de l'exemple 1, mais en remplaçant PEG 20 000 par PEO>5 000 000 dont le point de fusion est 64,1 °C et la température de décomposition thermique est nettement supérieure aux températures de synthèse utilisées, et en appliquant le traitement thermique suivant :
- maintien pendant 40 min à 150°C pour faire fondre le polymère,
- chauffage jusqu'à 260°C avec une vitesse de 1°C/min,
- maintien à 260°C pendant 1h30,
- chauffage jusqu'à 295°C avec une vitesse de 0,2°C/min,
- maintien à 295°C pendant 24 heures, cette température étant la température de réaction des précurseurs.

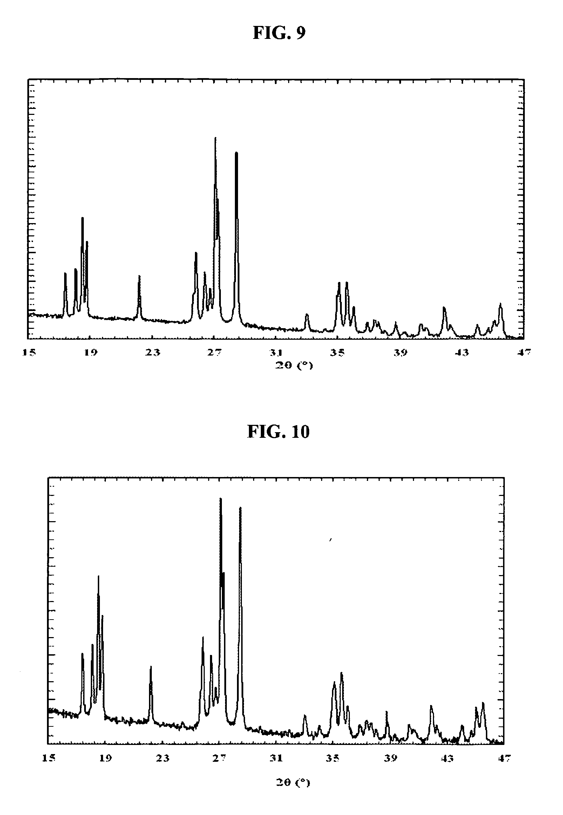

Le diagramme de diffraction des rayons X du produit obtenu est représenté sur la figure 9. Il montre qu'ici également, le composé obtenu est LiFeSO₄F de structure tavorite avec un degré de pureté de 100%.

### Exemple 3

### Préparation de LiFeSO₄F dans PEG monométhyl éther 1 000

On a reproduit le mode opératoire de l'exemple 1, mais en remplaçant PEG 20 000 par un PEG monométhyléther de masse 1 000 u.a.

Le diagramme de diffraction des rayons X du produit obtenu est représenté sur la figure 10. Il montre que ledit produit est une phase unique de Tavorite LiFeSO₄F avec un taux de pureté de 100%.

### Exemple 4

### Préparation de LiFeSO₄F dans PEG monométhyl éther 2 000

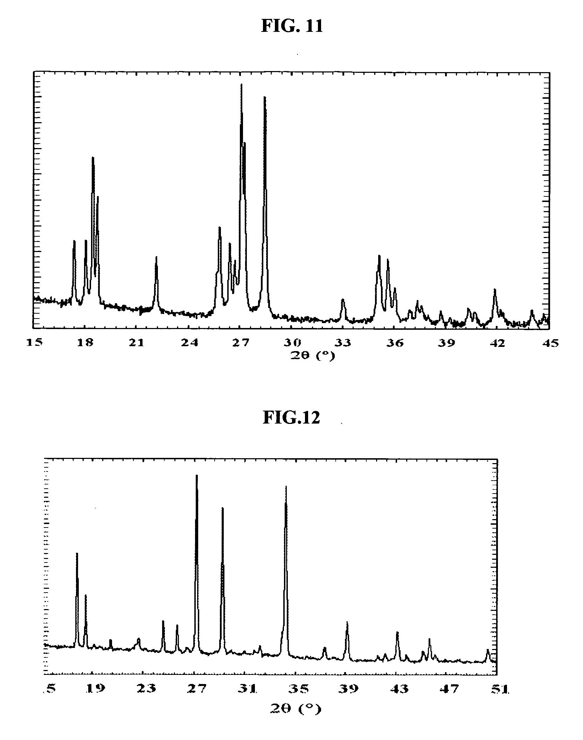

On a reproduit le mode opératoire de l'exemple 1, en remplaçant PEG 20 000 par un PEG monométhyléther de masse 2 000 u.a., en utilisant 0,13 g de LiF et 0,8 g de FeSO₄.H₂O. Le diagramme de diffraction du produit obtenu sous forme de poudre, représenté sur la figure 11, montre qu'il s'agit d'une phase unique de LiFeSO₄F.

### Exemple 5

### Préparation de LiFeSO₄F dans PEG 8000

On a reproduit le mode opératoire de l'exemple 1, mais en utilisant PEG 8 000 au lieu de PEG 20 000. Le produit obtenu ne contient que 80% de LiFeSO₄F du fait que le polymère se décompose avant la fin de la réaction.

### Exemple 6

### Préparation de NaFeSO₄F dans PEG 20 000

On a reproduit le mode opératoire de l'exemple 1, mais en utilisant 0,23 g de NaF au lieu de 0,1297 g de LiF, et en maintenant le mélange réactionnel à 290°C au lieu de 295°C. Le diagramme de diffraction du produit obtenu sous forme de poudre montre qu'il s'agit d'une phase unique de NaFeSO₄F. Ledit diagramme est représenté sur la figure 12.

### Exemple 7

### Préparation de LiCoSO₄F dans PEG 20 000

On a préparé CoSO₄.H₂O à partir de CoSO₄.7H₂O selon le procédé décrit dans l'exemple 1 pour FeSO₄.H₂O.

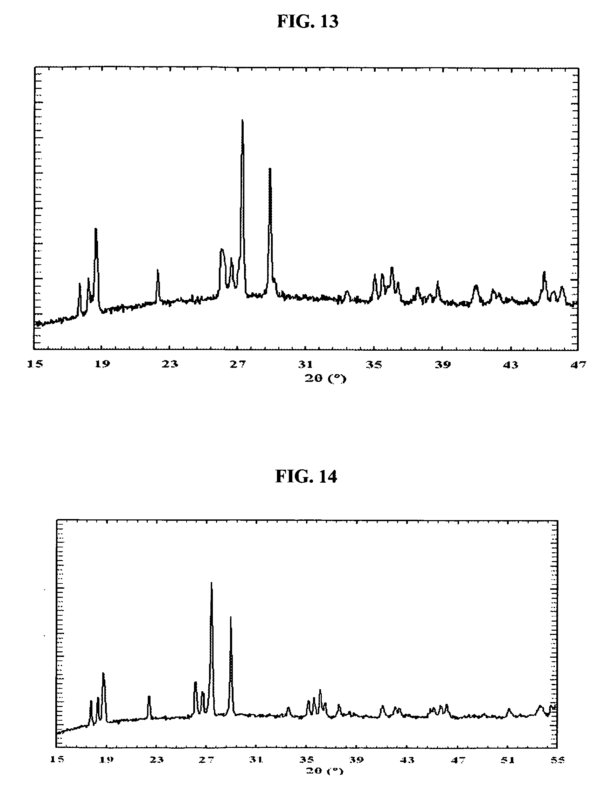

On a reproduit le mode opératoire de l'exemple 1, mais en utilisant 0,13 g de LiF au lieu de 0,1297 g de LiF, et 0,8 g de CoSO₄.H₂O au lieu de FeSO₄.H₂O, et en maintenant le mélange réactionnel à 270°C au lieu de 295°C. Le diagramme de diffraction du produit obtenu sous forme de poudre montre qu'il s'agit d'une phase unique de LiCoSO₄F. Ledit diagramme est représenté sur la figure 13.

### Exemple 8

### Préparation de LiNiSO₄F

On a reproduit le mode opératoire de l'exemple 1, mais en utilisant 0,1297 g de LiF, et 0,85g de NiSO₄.H₂O au lieu de FeSO₄.H₂O, et en maintenant le mélange réactionnel à 270°C au lieu de 295°C. Le diagramme de diffraction du produit obtenu sous forme de poudre montre qu'il s'agit d'une phase unique de LiNiSO₄F. Ledit diagramme est représenté sur la figure 14.

### Exemple 9

### Préparation de LiFeSO₄F dans un copolymère PEG-PPO-PEG (M_{w} 5800)

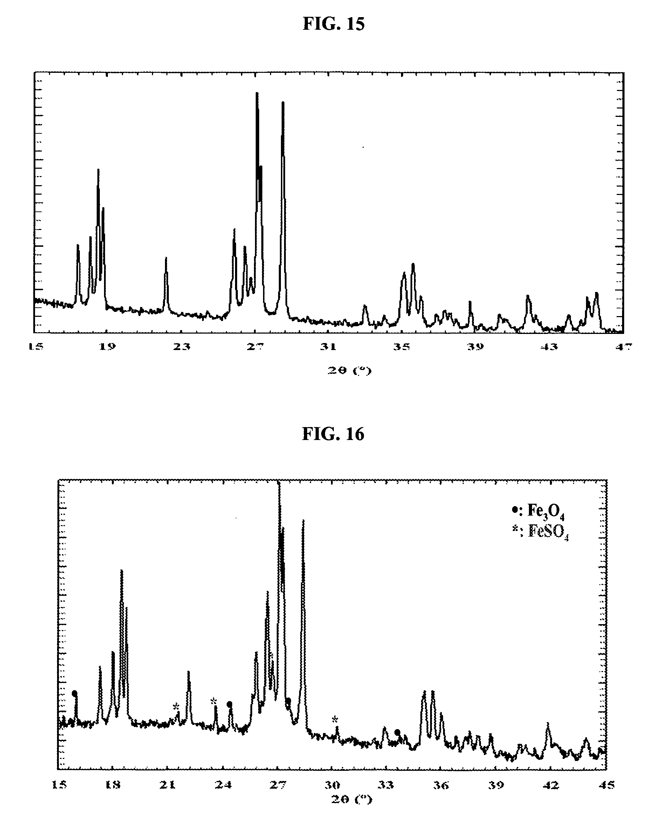

On a reproduit le mode opératoire de l'exemple 1, en utilisant 0,13 g de LiF, 0,85 g de FeSO₄.H₂O, en remplaçant le PEG 20 000 par le copolymère PEG-PPO-PEG (M_{w} 5800) Pluronic PE10300, et en maintenant le mélange réactionnel à 2 8 0 ° C au lieu de 295 °C. Le diagramme de diffraction du produit obtenu sous forme de poudre montre qu'il s'agit d'une phase unique de LiFeSO₄F. Ledit diagramme est représenté sur la figure 15.

### EXEMPLE 10

### Préparation de LiFeSO₄F dans le PMMA 38 000

On a mélangé 0,85 g de FeSO₄.H₂O et 0,1297 g de LiF (ce qui correspond à un rapport molaire 1/1) dans un broyeur à billes SPEX contenant une bille d'acier de 1 cm de diamètre, on a scellé le broyeur sous argon, puis on a broyé le mélange pendant 10 min.

Dans un autoclave comprenant un gainage en Téflon^{®}, on a placé 3 g de PMMA 38000, puis le mélange de LiF et de FeSO₄.H₂O obtenu après broyage, et on a recouvert par 3 g supplémentaires de PMMA 38 000. Ensuite, on a fermé l'autoclave sous argon, on l'a placé dans un four préchauffé à 150°C, et on a soumis à un traitement thermique comprenant les étapes suivantes :
- maintien pendant 1 h à 150°C pour faire fondre le polymère,
- chauffage jusqu'à 265°C en 1,9 h,
- chauffage jusqu'à 295°C en 1 h,
- maintien à 295°C pendant 24 heures, cette température étant la température de réaction des précurseurs.

Après refroidissement du mélange réactionnel jusqu'à la température ambiante, on a ajouté de l'acétate d'éthyle, puis on a séparé par centrifugation le fluorosulfate obtenu sous forme de poudre de la solution de polymère dans l'acétate d'éthyle. Ensuite, la poudre obtenue après centrifugation a été lavée 3 fois avec 20 mL de dichlorométhane, puis séchée à l'étuve à 60°C.

Le fluorosulfate obtenu est sous forme d'une poudre vert foncé.

Le diagramme de diffraction du produit obtenu est représenté sur la figure 16. Il montre que le produit est une phase LiFeSO₄F de structure tavorite pratiquement pure à l'exception de quelques pics d'intensité très faible signalés par * (correspondant à la phase FeSO₄) et par ● (correspondant à la phase Fe₃O₄). Ces impuretés représentent des quantités proches de 5%.

La présence de ces impuretés est probablement due au fait que le PMMA commence à se décomposer à une température proche de la température du synthèse.

### Exemple 11

### Préparation de LiFeSO₄F dans le Polystyrène

On a reproduit le mode opératoire de l'exemple 10, en remplaçant le polymère PMMA par un polystyrène de masse 25 000.

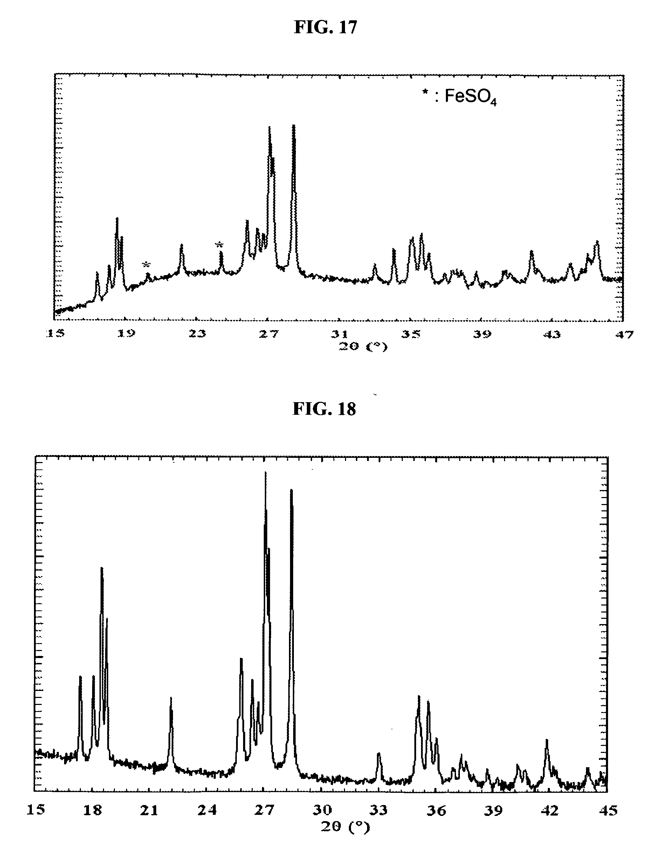

Le diagramme de diffraction des rayons X du produit obtenu est représenté sur la figure 17. Il montre l'obtention de la phase LiFeSO₄F de structure tavorite pratiquement pure. Les 2 pics d'intensité très faible et indiqués par des * correspondent à la phase FeSO₄.

### Exemple 12

### Préparation de LiFeSO₄F dans le PEG diméthyléther 2 000

On reproduit le mode opératoire de l'exemple 1, en remplaçant le PEG 20 000 par un PEG diméthyléther de masse 2 000 u.a., en utilisant 0,13g de LiF et 0,85g de FeSO₄.H₂O. Le diagramme de diffraction du produit obtenu sur poudre est représenté sur la figure 18, et il montre qu'il s'agit d'une phase unique LiFeSO₄F.

### EXEMPLE 13

### Exemples comparatifs

Le mode opératoire de l'exemple 10 a été reproduit en utilisant comme polymère support un PEG 600 di-acide et d'autre part un copolymère PE-block-PEG 1 400.

### Préparation dans le copolymère PE-block-PEG

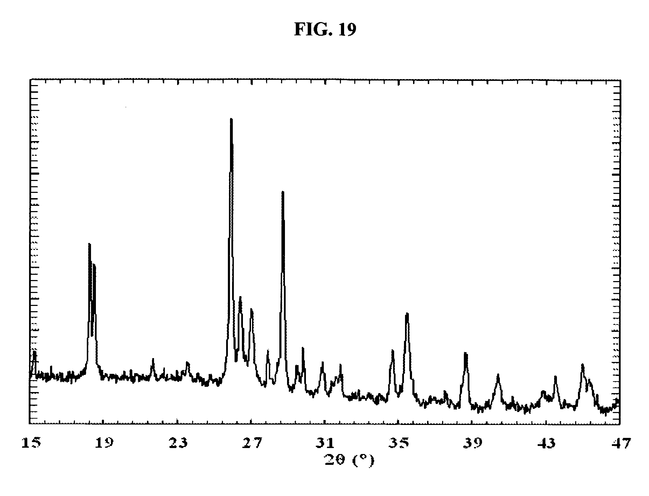

Le diagramme de diffraction des rayons X du produit obtenu dans le copolymère PE-block-PEG 1 400 est représenté sur la figure 19. Il montre la coexistence de la phase FeSO₄.H₂O et d'autres phases telles que notamment FeSO₄.H₂O, Fe₃O₄, et FeF₃. Il n'y a pas formation de la phase LiFeSO₄F.

### Préparation dans le PEG 600 di acide

Le produit formé contient 30% de LiFeSO₄F et 70% de FeSO₄.H₂O.

Dans les deux cas, l'absence ou le faible taux de formation du composé LiFeSO₄F est du au manque de stabilité des polymères utilisés comme support réactionnel.

## Revendications

1. Procédé de préparation d'un matériau constitué par des particules d'un composé qui a une structure de type Tavorite et qui répond à la formule (A₁₋ₐA'ₐ)ₓ(Z_{1-b}Z'_{b})_{z}(SO₄)ₛF_{f} (I) dans laquelle : A représente Li ou Na ; A' représente une lacune ou au moins un élément dopant ; Z représente au moins un élément 3d choisi parmi Fe, Co, et Ni ; Z' représente une lacune ou au moins un élément dopant ; les indices a, b, x, z, s et f sont choisis de manière à assurer l'électroneutralité du composé, et a≥0, b≥0, x≥0, z≥0, s>0, f>0 ; et les quantités respectives a et b de dopant A et Z' sont telles que la structure de type Tavorite est préservée, ledit procédé comprenant :
- une 1^{ère} étape consistant à préparer un mélange de précurseurs contenant un sulfate hydraté du ou des éléments Z, le fluorure du ou des éléments A, un précurseur du ou des éléments Z' lorsque a>0 et un précurseur du ou des éléments A' lorsque b>0 ;
- une 2^{ème} étape consistant à mettre en contact le mélange obtenu lors de la 1^{ère} étape, avec un support solide;
- une 3^{ème} étape consistant à porter le mélange obtenu à la fin de la 2^{ème} étape à la température de réaction des précurseurs mélangés au cours de la 1^{ère} étape, et à maintenir ladite température jusqu'à la fin de la réaction;
- une 4^{ème} étape consistant à éliminer le support solide;
ledit procédé étant **caractérisé en ce que** le support solide est un polymère qui est solide à la température ambiante, qui a un point de fusion inférieur à la température de réaction des précurseurs et qui est stable au moins jusqu'à la température de réaction des précurseurs, ledit polymère étant soluble dans un solvant organique.

2. Procédé selon la revendication 1, **caractérisé en ce que** le polymère support de la réaction est un polyéthylène glycol (PEG), un polyoxyéthylène (POE), un polystyrène (PS) ou un poly(méthacrylate de méthyle) PMMA.

3. Procédé selon la revendication 1, **caractérisé en ce que** A' est un élément dopant choisi parmi les métaux alcalins différents de A, les métaux alcalino-terreux et les métaux 3d, et a<0,25.

4. Procédé selon la revendication 1, **caractérisé en ce que** Z' est un élément dopant, choisi parmi les métaux alcalins, Mn, Mg, Ca, Sc, Ti, V, Cr, Zn, Al, Ga, Sn, Zr, Nb et Ta dans au moins un de leurs degrés d'oxydation, et b<0,25.

5. Procédé selon la revendication 1, **caractérisé en ce que**, dans la 1^{ère} étape du procédé, les précurseurs sont utilisés en quantité stoechiométrique, ou avec un excès de fluorure de métal alcalin A.

6. Procédé selon la revendication 1, **caractérisé en ce que** la quantité de précurseurs dans le mélange obtenu à la fin de la 2^{ème} étape est de 10 à 50 % en masse, par rapport à la masse totale "précurseurs + support polymère".

7. Procédé selon la revendication 1, **caractérisé en ce que** l'on introduit dans le mélange de la 1^{ère} étape, un précurseur de A' choisi parmi les composés dont l'anion est F⁻, SO₄²⁻ ou un halogénure autre que F.

8. Procédé selon la revendication 1, **caractérisé en ce que** l'on introduit dans le mélange de la 1^{ère} étape, un fluorure choisi parmi les fluorures d'ammonium d'imidazolium ou de pyridinium.

9. Procédé selon la revendication 1, **caractérisé en ce que** le précurseur de Z est un composé ZSO₄.H₂O dans lequel Z est Fe, Co, Ni ou une solution solide de ces composés.

10. Procédé selon la revendication 1, **caractérisé en ce que** l'on introduit dans le mélange de la 1^{ère} étape, un précurseur de A' choisi parmi les sulfates de A', et les halogénures de A'.

11. Procédé selon la revendication 1, caractérisé en que l'on introduit dans le mélange de la 1^{ère} étape, un précurseur de Z' choisi parmi les sulfates de Z' et les halogénures de Z'.

12. Procédé selon la revendication 1, **caractérisé en ce que** le mélange de la 1^{ère} étape contient un précurseur de l'anion SO₄²⁻ choisi parmi l'acide H₂SO₄, et ses sels d'ammonium, d'amine, d'imidazole ou de pyridine.

13. Procédé selon la revendication 1, **caractérisé en ce que** la troisième étape comprend une première phase visant à faire fondre le polymère support de la réaction, à une température entre 30 et 160°C, et une deuxième phase visant à faire réagir les précurseurs du composé (I) à une température entre 230 et 300°C.

14. Procédé selon la revendication 1, **caractérisé en ce que** la 3^{ème} étape est effectuée sous atmosphère inerte, à la pression atmosphérique.

## Patentansprüche

1. Verfahren für die Zubereitung eines Materials, das von Partikeln einer Verbindung gebildet wird, die eine Struktur vom Typ Tavorit hat und die der Formel (A₁₋ₐA'ₐ)ₓ(Z_{1-b}Z'_{b})_{z}(SO₄)ₛf_{f}(I) entspricht, wobei: A Li oder Na darstellt; A' eine Lücke oder mindestens ein dotierendes Element darstellt; Z mindestens ein 3d-Element darstellt, das aus Fe, Co und Ni ausgewählt ist; Z' eine Lücke oder mindestens ein dotierendes Element darstellt; die Indizes a, b, x, z, s und f derart ausgewählt sind, dass die Elektroneutralität der Verbindung gesichert ist, und a≥0, b≥0, x≥0, z>0, s>0, f>0; und die jeweiligen Mengen a und b des Dotierungsmittels A und Z' derart sind, dass die Struktur vom Typ Tavorit geschützt wird, wobei das Verfahren umfasst:
- einen 1. Schritt, der darin besteht, ein Vorläufergemisch zuzubereiten, das ein hydratiertes Sulfat des oder der Elemente Z, das Fluorid des oder der Elemente A, einen Vorläufer des oder der Elemente Z', wenn a>0 und einen Vorläufer des oder der Elemente A', wenn b>0, enthält;
- einen 2. Schritt, der darin besteht, das beim 1. Schritt gewonnene Gemisch mit einem festen Träger in Kontakt zu bringen,
- einen 3. Schritt, der darin besteht, das am Ende des 2. Schritts gewonnene Gemisch auf die Reaktionstemperatur der während des 1. Schritts gemischten Vorläufer zu bringen und die Temperatur bis zum Ende der Reaktion zu halten,
- einen 4. Schritt, der darin besteht, den festen Träger zu entfernen,
wobei das Verfahren **dadurch gekennzeichnet ist, dass** der feste Träger ein Polymer ist, das bei Raumtemperatur fest ist, das einen Schmelzpunkt unter der Reaktionstemperatur der Vorläufer hat und das mindestens bis zur Reaktionstemperatur der Vorläufer stabil ist, wobei das Polymer in einem organischen Lösungsmittel löslich ist.

2. Verfahren nach Anspruch 1, **dadurch gekennzeichnet, dass** das Trägerpolymer der Reaktion ein Polyethylenglycol (PEG), ein Polyoxyethylen (POE), ein Polystyrol (PS) oder ein Polymethyl(methacrylat) PMMA ist.

3. Verfahren nach Anspruch 1, **dadurch gekennzeichnet, dass** A' ein dotierendes Element ist, das aus den alkalischen Metallen, die unterschiedlich von A sind, den Erdalkalimetallen und den 3d-Metallen ausgewählt ist, und a<0,25.

4. Verfahren nach Anspruch 1, **dadurch gekennzeichnet, dass** Z' ein dotierendes Element ist, das aus den alkalischen Metallen, Mn, Mg, Ca, Sc, Ti, V, Cr, Zn, Al, Ga, Sn, Zr, Nb und Ta in mindestens einem ihrer Oxidationsgrade ausgewählt ist, und b<0,25.

5. Verfahren nach Anspruch 1, **dadurch gekennzeichnet, dass** im 1. Schritt des Verfahrens die Vorläufer in stoechiometrischer Menge oder mit einem Fluoridüberschuss alkalischen Metalls A verwendet werden.

6. Verfahren nach Anspruch 1, **dadurch gekennzeichnet, dass** die Vorläufermenge in dem Gemisch, das am Ende des 2. Schritts erhalten wird, im Verhältnis zur Gesamtmasse "Vorläufer + Polymerträger" 10 bis 50 Massenprozent beträgt.

7. Verfahren nach Anspruch 1, **dadurch gekennzeichnet, dass** in das Gemisch des 1. Schritts ein Vorläufer von A' eingebracht wird, der aus den Verbindungen ausgewählt ist, deren Anion F⁻, SO₄²⁻ oder ein anderes Halogenid als F ist.

8. Verfahren nach Anspruch 1, **dadurch gekennzeichnet, dass** in das Gemisch des 1. Schritts ein Fluorid eingebracht wird, das aus den Ammonium-, Imidazolium-oder Pyridiniumfluoriden ausgewählt ist.

9. Verfahren nach Anspruch 1, **dadurch gekennzeichnet, dass** der Vorläufer von Z eine Verbindung ZSO₄.H₂O ist, wobei Z Fe, Co, Ni oder eine feste Lösung dieser Verbindungen ist.

10. Verfahren nach Anspruch 1, **dadurch gekennzeichnet, dass** in das Gemisch des 1. Schritts ein Vorläufer von A' eingebracht wird, der aus den Sulfaten von A' und den Halogeniden von A' ausgewählt ist.

11. Verfahren nach Anspruch 1, **dadurch gekennzeichnet, dass** in das Gemisch des 1. Schritts ein Vorläufer von Z' eingebracht wird, der aus den Sulfaten von Z' und den Halogeniden von Z' ausgewählt ist.

12. Verfahren nach Anspruch 1, **dadurch gekennzeichnet, dass** das Gemisch des 1. Schritts einen Vorläufer des Anions SO₄²⁻ enthält, der aus der Säure H₂SO₄ und ihren Ammonium-, Amin-, Imidazol- oder Pyridinsalzen ausgewählt ist.

13. Verfahren nach Anspruch 1, **dadurch gekennzeichnet, dass** der dritte Schritt eine erste Phase umfasst, die darauf abzielt, das Trägerpolymer der Reaktion bei einer Temperatur zwischen 30 und 160 °C zu schmelzen und eine zweite Phase, die darauf abzielt, die Vorläufer der Verbindung (I) bei einer Temperatur zwischen 230 und 300 °C reagieren zu lassen.

14. Verfahren nach Anspruch 1, **dadurch gekennzeichnet, dass** der 3. Schritt unter inerter Atmosphäre bei atmosphärischem Druck durchgeführt wird.

## Claims

1. A method for preparing a material consisting of particles of a compound that has a structure of the Tavorite type and that corresponds to the formula (A₁₋ₐA'ₐ)ₓ(Z_{1-b}Z'_{b})_{z}(SO₄)ₛF_{f} (I) in which: A represents Li or Na; A' represents a vacancy or at least one doping element; Z represents at least one 3d element selected from Fe, Co, and Ni; Z' represents a vacancy or at least one doping element; the subscripts a, b, x, z, s and f are selected so as to ensure electroneutrality of the compound, and a≥0, b≥0, x≥0, z>0, s>0, f>0; and the respective amounts "a" and "b" of dopant A and Z' are such that the structure of the Tavorite type is preserved, said method comprising:
- a 1^{st} step consisting of preparing a mixture of precursors containing a hydrated sulfate of the element or elements Z, the fluoride of the element or elements A, a precursor of the element or elements Z' when a>0 and a precursor of the element or elements A' when b>0;
- a 2^{nd} step consisting of contacting the mixture obtained in the 1^{st} step, with a solid substrate;
- a 3^{rd} step consisting of bringing the mixture obtained at the end of the 2^{nd} step up to the reaction temperature of the precursors mixed during the 1st step, and maintaining said temperature until the end of the reaction;
- a 4^{th} step consisting of removing the solid substrate;
said method being **characterized in that** the solid substrate is a polymer that is solid at room temperature, that has a melting point below the reaction temperature of the precursors and that is stable at least up to the reaction temperature of the precursors, said polymer being soluble in an organic solvent.

2. The method as claimed in claim 1, **characterized in that** the reaction substrate polymer is a polyethylene glycol (PEG), a polyoxyethylene (PEO), a polystyrene (PS) or a poly(methyl methacrylate) PMMA.

3. The method as claimed in claim 1, **characterized in that** A' is a doping element selected from alkali metals different from A, alkaline-earth metals and 3d metals, and a<0.25.

4. The method as claimed in claim 1, **characterized in that** Z' is a doping element, selected from the alkali metals, Mn, Mg, Ca, Sc, Ti, V, Cr, Zn, Al, Ga, Sn, Zr, Nb and Ta in at least one of their oxidation states, and b<0.25.

5. The method as claimed in claim 1, **characterized in that**, in the 1^{st} step of the method, the precursors are used in stoichiometric amount, or with an excess of alkali metal fluoride A.

6. The method as claimed in claim 1, **characterized in that** the amount of precursors in the mixture obtained at the end of the 2^{nd} step is from 10 to 50 wt%, relative to the total weight of "precursors + polymer substrate".

7. The method as claimed in claim 1, **characterized in that** a precursor of A' selected from the compounds whose anion is F⁻, SO₄²⁻ or a halide other than F is introduced into the mixture from the 1^{st} step.

8. The method as claimed in claim 1, **characterized in that** a fluoride selected from the ammonium, imidazolium or pyridinium fluorides is introduced into the mixture from the 1^{st} step.

9. The method as claimed in claim 1, **characterized in that** the precursor of Z is a compound ZSO₄.H₂O in which Z is Fe, Co, Ni or a solid solution of these compounds.

10. The method as claimed in claim 1, **characterized in that** a precursor of A' selected from the sulfates of A', and the halides of A' is introduced into the mixture from the 1^{st} step.

11. The method as claimed in claim 1, **characterized in that** a precursor of Z' selected from the sulfates of Z' and the halides of Z' is introduced into the mixture from the 1^{st} step.

12. The method as claimed in claim 1, **characterized in that** the mixture from the 1^{st} step contains a precursor of the SO₄²⁻ anion selected from the acid H₂SO₄, and its ammonium, amine, imidazole or pyridine salts.

13. The method as claimed in claim 1, **characterized in that** the third step comprises a first phase for melting the reaction substrate polymer, at a temperature between 30 and 160°C, and a second phase for reacting the precursors of compound (I) at a temperature between 230 and 300°C.

14. The method as claimed in claim 1, **characterized in that** the 3^{rd} step is carried out under inert atmosphere, at atmospheric pressure.
